Europäisches Patentamt

European Patent Office

Office européen des brevets

(19)

(11) **EP 1 389 884 A1**

(12) ## EUROPÄISCHE PATENTANMELDUNG

(43) Veröffentlichungstag:
**18.02.2004 Patentblatt 2004/08**

(51) Int Cl.⁷: **H04Q 7/36**, H04L 12/56

(21) Anmeldenummer: **02018095.6**

(22) Anmeldetag: **13.08.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(71) Anmelder: **SIEMENS AKTIENGESELLSCHAFT
80333 München (DE)**

(72) Erfinder:
- **Halfmann, Ruediger
  67697 Otterberg (DE)**
- **Li, Hui, Dr.
  90489 Nürnberg (DE)**
- **Lott, Matthias
  81477 München (DE)**
- **Schulz, Egon, Dr.
  80993 München (DE)**

(54) **Verfahren zum Betrieb eines Funksystems mittels Richtantennen sowie sendende Station und Funksystem**

(57)     Die Erfindung betrifft ein Verfahren zum Betrieb eines Funksystems mit Stationen, die zumindest teilweise mit einer Richtantenne ausgestattet sind sowie eine entsprechende sendende Station und ein entsprechendes Funksystem. Bei dem erfindungsgemäßen Verfahren zum Betrieb eines Funksystems mit Stationen MS1, MS2, MS3, MS4 ist eine erste sendende Station MS1 mit einer Richtantenne RA ausgestattet. Die erste sendende Station MS1 sieht eine Übertragung von Daten D1 an eine erste empfangende Station MS3 mittels der Richtantenne RA in einem ersten räumlichen Funkbereich F1 vor und sendet eine Richtungsinformation RI rund, der entnehmbar ist, in welche Raumrichtung $\vec{R}_1$ sie die Übertragung der Daten D1 vorsieht. Anhand der rundgesendeten Richtungsinformation RI können Übertragungsressourcen vorteilhaft belegt werden.

FIG 1

EP 1 389 884 A1

**Beschreibung**

Die Erfindung betrifft ein Verfahren zum Betrieb eines Funksystems mit Stationen die zumindest teilweise mit einer Richtantenne ausgestattet sind sowie eine entsprechende sendende Station und ein entsprechendes Funksystem.

In Funksystemen werden sowohl Signalisierungsdaten bzw. Organisationsinformationen (beispielsweise Steuersignale oder Informationen über die Qualität der Verbindung) als auch Nutzdaten (beispielsweise Sprache, Bildinformationen oder andere Daten) mittels elektromagnetischer Wellen über eine Funkschnittstelle zwischen sendender und empfangender Station übertragen.

Funksysteme sind beispielsweise zellulare Mobilfunksysteme wie das GSM (Global System for Mobile communications) und das UMTS (Universal Mobile Telecommunications System). Hier werden Daten und Datenpakete aus dem Festnetz mittels eine zellulare Struktur definierender Basisstationen über eine Luftschnittstelle zu Mobilstationen übertragen. Die Basisstationen verfügen dabei über omnidirektionale, d.h. in alle Raumrichtungen abstrahlende; Antennen und/oder über Richtantennen, mit denen eine Abstrahlung der Funksignale in eine definierte Richtung ermöglicht wird.

Weiterhin sind drahtlose lokale Netze (Wireless Local Area Networks - WLANs) bekannt, für die zwei grundlegende Betriebsarten existieren:

1. Über ein Infrastrukturnetz wird ein Zugang zu anderen Netzen und somit Datentransfer zwischen verschiedenen Funknetzen ermöglicht. Das Infrastrukturnetz kann darüber hinaus für die Steuerung des Zugriffs auf die Netzwerkkomponenten der beteiligten Netze verantwortlich sein.

2. In Form eines selbstorganisierenden Netzes ( auch Ad-hoc-Netz genannt) wird auf eine Infrastruktur verzichtet. Teilnehmergeräte eines selbstorganisierenden Netzes können miteinander kommunizieren, sofern sie im gegenseitigen Funkbereich liegen oder weitere Teilnehmergeräte die Daten weiterleiten können. Zugang zu anderen Netzen ist in Kombination mit einem Infrastrukturnetz möglich.

Wird ein drahtloses lokales Netz über ein Infrastrukturnetz realisiert, so findet eine Kommunikation zwischen Teilnehmergeräten und Zugangspunkten statt, wobei die Zugangspunkte zusätzlich zur Steuerung der Funkübertragung auch die Verbindung zu anderen leitungsgebundenen oder drahtlosen Netzen herstellen.

In selbstorganisierenden Netzen sind mehrere Teilnehmergeräte in der Lage, auch ohne Zugangspunkte eine Funkverbindung untereinander aufzubauen. Die Verbindung zwischen zwei Teilnehmergeräten erfolgt dabei entweder direkt oder bei größeren Entfernungen über weitere gleichartige Teilnehmergeräte, die für diese Verbindung Relaisstationen bilden. Die Teilnehmergeräte eines selbstorganisierenden Netzes können mobile Stationen (beispielsweise Mobilfunkgeräte von Personen oder in Verkehrsfahrzeugen) und/oder vorwiegend stationäre Stationen (beispielsweise Computer, Drucker, Haushaltsgeräte) sein. Selbstorganisierenden Netze sind beispielsweise in drahtlosen lokalen Netzen wie HiperLAN und IEEE 802.11 realisiert. Anwendung finden solche drahtlosen lokalen Netze nicht nur in den üblichen Internet- und Telematikbereichen sondern auch im Bereich der Inter-Fahrzeugkommunikation, wie z.B. bei Systemen zur Gefahrenwarnungen oder kooperativen Fahrerassistenzsystemen.

In selbstorganisierenden Netzen mit Rahmenstruktur erfolgt der Zugriff auf die Funkschnittstelle in Übertragungsrahmen. Dabei signalisiert ein erstes Teilnehmergerät mit Sendewunsch während einer Signalisierungsphase eines Übertragungsrahmens, in welchem Zeitintervall es in der nachfolgenden Datenübertragungsphase des Übertragungsrahmens Daten übertragen will. Weitere Teilnehmergeräte im Funkbereich des ersten Teilnehmergeräts, die ebenfalls in der Datenübertragungsphase des Zeitrahmens senden wollen, empfangen die Information über das Zeitintervall und reservieren nacheinander weitere Zeitintervalle in der Datenübertragungsphase. Die einzelnen Zeitintervalle werden innerhalb der Datenübertragungsphase des Übertragungsrahmens aneinander gereiht. Die maximale Menge an Daten, die während einer Datenübertragungsphase eines Übertragungsrahmens gesendet werden kann, ist dabei durch die Länge der Datenübertragungsphase bestimmt. Im Extremfall überträgt nur ein Teilnehmer pro Datenübertragungsphase, so dass die Teilnehmer über mehrere Datenübertragungsphasen verteilt werden. Für den einzelnen Teilnehmer können so Übertragungspausen von einigen Datenübertragungsphasen entstehen.

In Y.-B. Ko et al., "Medium Access Control Protocols Using Directional Antennas in Ad Hoc Networks", Proceedings of the IEEE INFOCOM 2000, März 2000, wird in einem Ad-hoc-Netz, in dem alle Stationen mehrere Richtantennen besitzen, eine Verbindungsanfrage (RTS: Request-to-send) von einer ersten Station an eine zweite Station über eine Richtantenne ausgesendet. Zusammen mit der Verbindungsanfrage übermittelt die erste Station ihre physikalische Position sowie die Dauer der Datenübertragung. Bestätigt die zweite Station die Verbindungsanfrage, so überträgt die erste Station für die angegebene Dauer ihre Daten an die zweite Station. Empfängt eine dritte Station die Verbindungsanfrage der ersten Station, so blockiert die dritte Station ihre Richtantenne, die in Richtung der ersten Station zeigt, während der Datenübertragung von der ersten Station an die zweite Station. Richtantennen, die nicht in Richtung der ersten Station zeigen, kann die dritte Station während der Datenübertragung von der ersten Station an die zweite Station verwenden.

R. R. Choudhury beschreibt in "Using Directional Antennas for Medium Access Control in Ad hoc Networks", Technical Report der Texas A&M University an BBN Technologies, März 2002, ein Ad-hoc-Netz mit Stationen mit Antennensystemen, die entweder im Omni oder im Directional Mode betrieben werden können. Omni Mode bedeutet, es wird omnidirektional ausschließlich empfangen, d.h. Senden ist omnidirektional nicht möglich. Directional Mode heißt, dass bezüglich einer vorgebbaren Richtung sowohl gesendet als auch empfangen werden kann. Eine erste Station, die senden möchte, schickt im Directional Mode eine Verbindungsanfrage in die Richtung einer zweiten Station. Da alle Stationen des Ad-hoc-Netzes Antennen besitzen, die anhand eines empfangenen Signals die Richtung bestimmen können, aus der das Signal kam, kann auch die zweite Station mittels einer Richtantenne, die auf die erste Station ausgerichtet ist, der ersten Station die Verbindungsanfrage bestätigen. Daraufhin überträgt die erste Station Daten an die zweite Station. Empfängt eine andere Station, die sich im Omni Mode befindet die Verbindungsanfrage der ersten Station, so berechnet Sie die Richtung, aus der das Signal kam und verhindert eine eigene Datenübertragung in Richtung der ersten Station, während diese Daten an die zweite Station überträgt.

Eine Belegung von Übertragungsressourcen kann auch wie in dem Artikel von Soheila V. Bana und Pravin Varaiya, "Space Division Multiple Access (SDMA) for Robust Ad hoc Vehicle Communication Networks", IEEE fourth international conference on intelligent transportation systems, beschrieben ist, aufgrund der geografischen Position einer Station mit Sendewunsch erfolgen. In diesem Artikel wird ein SDMA-Verfahren beschrieben, bei dem jeder geografischen Position bzw. Fläche eins zu eins ein Zeitintervall oder eine Frequenz zugeordnet wird. Wird einer Station mit Sendewunsch ein bestimmtes Zeitintervall zugewiesen, dann ergibt sich die zeitliche Lage des Zeitintervalls relativ zu weiteren Zeitintervallen direkt aus der geografischen Position der Station mit Sendewunsch.

Der Erfindung liegt die Aufgabe zugrunde, ein Verfahren anzugeben, mit dem Übertragungsressourcen besser genutzt werden können.

Diese Aufgabe wird mit dem Verfahren mit den Merkmalen gemäß Anspruch 1, der sendenden Station nach Anspruch 13 und dem Funksystem nach Anspruch 14 gelöst.

Vorteilhafte Aus- und Weiterbildungen der Erfindung sind Gegenstand der abhängigen Ansprüche.

Bei dem erfindungsgemäßen Verfahren zum Betrieb eines Funksystems mit Stationen ist eine erste sendende Station mit einer Richtantenne ausgestattet. Die erste sendende Station sieht eine Übertragung von Daten an eine erste empfangende Station mittels der Richtantenne in einem ersten räumlichen Funkbereich vor und sendet eine Richtungsinformation rund (Broadcasting), der entnehmbar ist, in welche Raumrichtung sie die Übertragung der Daten vorsieht. Anhand der rundgesendeten Richtungsinformation können Übertragungsressourcen vorteilhaft belegt werden. Beispielsweise kann bei einem zentral gesteuerten Zugriffsverfahren eine Kontrollstation, die von mehreren Stationen eine entsprechende Richtungsinformation empfängt, diese Richtungsinformationen für die Belegung von Übertragungsressourcen durch die Stationen berücksichtigen. Ferner kann eine Kontrollstation in einem dezentral organisierten System die Richtungsinformationen mehrerer Stationen empfangen und in einem Rundsenderuf an alle Stationen weiterleiten oder selbst Übertragungsressourcen entsprechend den Richtungsinformationen belegen.

Empfängt insbesondere eine zweite sendende Station die Richtungsinformation, so wird in vorteilhafter Weise die Richtungsinformation für ihre Belegung von Übertragungsressourcen berücksichtigt. Die zweite sendende Station kann z.B. in günstiger Weise Übertragungsressourcen für ihre eigene Datenübertragung belegen.

Ist die zweite sendende Station mit einer Richtantenne ausgestattet und sieht sie eine Übertragung von Daten an eine zweite empfangende Station mittels ihrer Richtantenne in einem zweiten räumlichen Funkbereich vor, dann ist es von Vorteil, dass die zweite sendende Station anhand der Richtungsinformation der ersten sendenden Station überprüft, ob der erste und der zweite räumliche Funkbereich bei einer der empfangenden Stationen überlappen. Die erste und zweite sendende Station können ihre Daten dann erfindungsgemäß derart übertragen, dass die Übertragung nur dann zeitgleich erfolgt, falls der erste und der zweite räumliche Funkbereich bei keiner der empfangenden Stationen überlappen. Auf diese Weise können, im Fall geeigneter erster und zweiter Funkbereiche, Daten zeitgleich übertragen werden, die ohne die Erfindung nacheinander übertragen werden müssten.

Eine besonders vorteilhafte Ausführungsform der Erfindung ergibt sich, wenn die zweite sendende Station (ebenfalls) eine Richtungsinformation rundsendet, der entnehmbar ist, in welche Raumrichtung sie die Übertragung ihrer Daten vorsieht. Weitere Stationen haben nun die Möglichkeit, die Richtungsinformation der ersten und zweiten sendenden Station zu empfangen und können ihre Übertragungsressourcen unter Auswertung der beiden Richtungsinformationen belegen.

In einer weiteren Ausführungsform der Erfindung senden die Stationen des Funksystems eine Positionsinformation über ihre geografische Position rund. Dieses Signal kann von allen Stationen empfangen werden und zusammen mit einer Richtungsinformation von sendenden Stationen zur Belegung von Übertragungsressourcen, insbesondere zur Überprüfung der Überlappung der räumlichen Funkbereiche, verwendet werden.

Vorteilhafter Weise sendet die erste sendende Station eine Information über ein zur Übertragung ihrer Daten an die erste empfangende Station vorgesehenes Zeitintervall rund. Stationen, die diese Information empfangen, wissen dann, wie die erste sendende Station den zeitlichen Ablauf ihrer Datenübertragung plant.

Sendet zusätzlich auch die zweite sendende Station nach Überprüfung der Überlappung des ersten und zweiten räumlichen Funkbereichs eine Information über ein zur Übertragung ihrer Daten an die zweite empfangende Station vorgesehenes Zeitintervall rund, können beide Zeitintervalle von den Stationen, die die Rundsendungen der ersten und der zweiten sendenden Station empfangen haben, zur Belegung ihrer Übertragungsressourcen berücksichtigt werden.

Die Richtungsinformationen geben in einer weiteren vorteilhaften Ausführungsform der Erfindung die geografische Position der jeweiligen sendenden Station und die jeweilige Raumrichtung, in die abgestrahlt wird, an. Stationen, die derartige Richtungsinformationen empfangen, verfügen so über eine aktuelle geografische Position der jeweiligen sendenden Station und haben einen geringeren Rechenaufwand, da die jeweilige Raumrichtung, in die abgestrahlt wird, den Richtungsinformationen direkt entnommen werden kann und nicht berechnet werden muss.

Weiterhin ist es von Vorteil, wenn die Richtungsinformationen, alternativ oder zusätzlich, die geografische Position der jeweiligen empfangenden Station angeben. Auf diese Weise kann eine möglichst aktuelle geografische Position der empfangenden Station für die Überprüfung der Überlappung der Funkbereiche verwendet werden.

In einem Funksystem in dem verschiedene Arten von Richtantennen verwendet werden ist es zweckmäßig, wenn die Richtungsinformationen eine Antenneninformation über die Eigenschaften der verwendeten Richtantenne enthalten. Aus der Antenneninformation läßt sich dann unmittelbar die Abstrahlcharakteristik der verwendeten Antenne ablesen und zur Bestimmung des zugehörigen Funkbereiches verwenden.

Die Erfindung läßt sich vorteilhaft ausführen, wenn das Funksystem ein zellulares oder ein drahtloses lokales Netz ist.

Vorteilhafter Weise ist mindestens eine der sendenden Stationen und/oder mindestens eine der empfangenden Stationen eine mobile Station.

Die sendende Station und das Funksystem sind mit den für die Durchführung des Verfahrens notwendigen Komponenten ausgestattet.

Die Erfindung wird im folgenden anhand von in den Figuren dargestellten Ausführungsbeispielen näher erläutert. Es zeigen:

Fig. 1: einen ersten Betriebszustand eines Funksystems, das nach dem erfindungsgemäßen Verfahren arbeitet,

Fig. 2: einen zweiten Betriebszustand des Funksystems,

Fig. 3: eine erfindungsgemäße sendende Station

Die Erfindung wird im folgenden anhand eines Ad-hoc-Netzes beschrieben. Selbstverständlich lässt sich die Erfindung auch in anderen Funksystemen verwenden. Insbesondere gilt dies für drahtlose lokale Netze sowie für GSM, UMTS und Mobilfunksysteme der 4. Generation.

Gleiche Bezugszeichen in den Figuren bezeichnen gleiche Gegenstände.

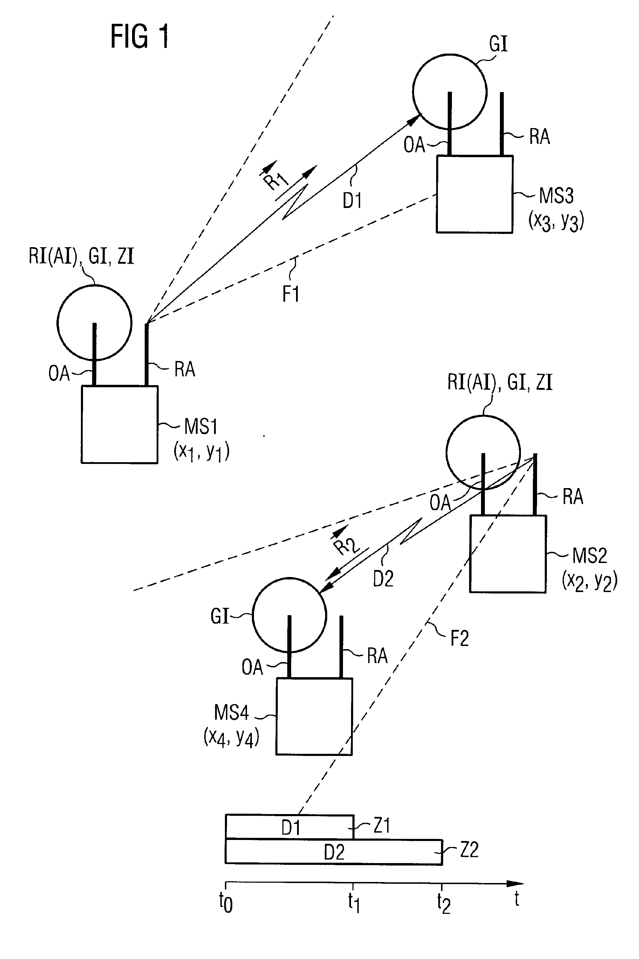

In dem in Figur 1 dargestellten Schema sind eine erste sendende Station MS1 und eine zweite sendende Station MS2 abgebildet sowie eine erste empfangende Station MS3 und eine zweite empfangende Station MS4. Die sendenden und die empfangenden Stationen MS1, MS2, MS3, MS4 verfügen jeweils über eine Richtantenne RA und eine omnidirektionale Antenne OA. Verfügen die empfangenden Stationen MS3, MS4 darüber hinaus über die gleichen Einrichtungen, die den sendenden Stationen MS1, MS2 die Durchführung der Erfindung ermöglichen, so können die empfangenden Stationen MS3, MS4 ihrerseits als sendende Stationen fungieren. Ebenso sind die sendenden Stationen MS1, MS2 als empfangende Stationen verwendbar, wenn sie über die gleichen Einrichtungen verfügen, wie die empfangenden Stationen MS3, MS4.

Die erste und zweite sendende Station MS1, MS2 sowie die erste und zweite empfangende Station MS3, MS4 verfügen jeweils über einen GPS-Empfänger (GPS: Global Positioning System) zur Bestimmung ihrer geografischen Position $(x_1, y_1)$, $(x_2, y_2)$, $(x_3, y_3)$, $(x_4, y_4)$. Eine Positionsinformation GI, die ihre jeweilige geografische Position $(x_1, y_1)$, $(x_2, y_2)$, $(x_3, y_3)$, $(x_4, y_4)$ enthält, senden die Stationen des Funksystems MS1, MS2, MS3, MS4 mittels ihrer omnidirektionalen Antennen OA rund. Unter rundsenden ist dabei das Aussenden einer Rundsendung (Broadcast) zu verstehen. Die Rundsendung einer Station kann von allen Stationen empfangen werden, die sich in Funkreichweite der Station befinden.

In einem beliebigen Funksystem kann die geografische Position einer Station des Funksystems selbstverständlich auch durch eine zentrale Kontrollstation bestimmt und rundgesendet und/oder an die Station zum Rundsenden übermittelt werden.

Mit ihrer einstellbaren Richtantenne RA strahlen die sendenden Stationen MS1, MS2 Funksignale in eine frei wählbare Raumrichtung $\vec{R}_1$, $\vec{R}_2$ ab. Der Öffnungswinkel unter dem die elektromagnetische Strahlung emittiert wird, ist dabei durch die Antennencharakteristik vorgegeben und ist beispielsweise in einer Identifizierungsnummer der jeweiligen Richtantenne RA codiert.

Die erste sendende Station MS1 überträgt Daten D1 mittels ihrer Richtantenne RA an die erste empfangende Station MS3. Die Übertragung der Daten D1 erfolgt in eine Raumrichtung $\vec{R}_1$ und in einem ersten räumlichen Funkbereich F1. Der erste räumliche Funkbereich F1 der ersten sendenden Station ist dabei durch ihre geografische Position $(x_1, y_1)$, durch die Raumrichtung $\vec{R}_1$, in die die Daten D1 übertragen werden, und ihre Antennencharakteristik festgelegt. Die Daten D1 werden in einem Zeitintervall Z1, das vom Zeitpunkt $t_0$ bis zum Zeitpunkt $t_1$ dauert, übertragen. Zeitgleich überträgt die zweite sendende Station MS2 Daten D2 an eine zweite empfangende Station MS4 in einem Zeitintervall Z2, das vom Zeitpunkt $t_0$ bis zum Zeitpunkt $t_2$ dauert. Die Daten D2 überträgt die zweite sendende Station MS2 an die zweite empfangende Station MS4 in eine Raumrichtung $\vec{R}_2$ und in einem zweiten räumlichen Funkbereich F2. Der zweite räumliche Funkbereich F2 der zweiten sendenden Station MS2 ist dabei durch ihre geografische Position $(x_2, y_2)$, durch die Raumrichtung $\vec{R}_2$, in die die Daten D2 übertragen werden, und ihre Antennencharakteristik festgelegt.

Die erste und die zweite sendende Station MS1, MS2 übertragen ihre Daten D1, D2 zumindest teilweise zeitgleich. Bei der Datenübertragung können keine Interferenzen zwischen der ersten und der zweiten sendenden Station MS1, MS2 auftreten, da der erste und zweite räumliche Funkbereich F1, F2 bei keiner der empfangenden Stationen MS3, MS4 überlappen.

In einem Ad-hoc-Netz, das nicht mit einem Infrastrukturnetz kombiniert wird, gibt es keine zentrale Einrichtung, die die Belegung von Übertragungsressourcen steuert. Die Stationen eines Ad-hoc-Netzes organisieren die zeitliche Abfolge ihrer Datenübertragungen daher selbst.

Zur Einteilung der Übertragungsressourcen, die der soeben beschriebenen Datenübertragung vorausgeht, sendet die erste sendende Station MS1 ihren Sendewunsch über ihre omnidirektionale Antenne OA rund. Mit dem Sendewunsch sendet die erste sendende Station MS1 ebenfalls eine Richtungsinformation RI, der entnehmbar ist, in welche Raumrichtung $\vec{R}_1$ sie die Übertragung der Daten D1 vorsieht. Durch die Schreibweise RI(AI) in Figur 1 ist dargestellt, dass in der Richtungsinformation RI eine Antenneninformation AI über die Eigenschaften der Richtantenne RA enthalten ist. Die Richtungsinformation RI enthält weiterhin eine Information ZI über das Zeitintervall Z1 das zur Übertragung der Daten D1 vorgesehen ist. Die Rundsendungen der ersten sendenden Station MS1 werden von der zweiten sendenden Station MS2 empfangen und für die Belegung von Übertragungsressourcen, d.h. für die Festlegung der relativen zeitlichen Lage der Zeitintervalle Z1, Z2 verwendet.

Die zweite sendende Station prüft dazu, ob der erste räumliche Funkbereich F1, den sie mittels der Richtungsinformation RI und der darin enthaltenen Antenneninformation AI über die Eigenschaften der Richtantenne RA der ersten sendenden Station MS1 ermitteln kann, bei einer der empfangenden Stationen MS3, MS4 mit dem zweiten räumlichen Funkbereich F2 überlappt. Im Fall einer Überlappung legt die zweite sendende Station MS2 ihr Zeitintervall Z2 hinter das Zeitintervall Z1 der ersten sendenden Station, um Interferenzen zu vermeiden. Liegt keinerlei Überlappung vor, wie in Figur 1 dargestellt, so beginnen die erste und die zweite sendende Station MS1, MS2 die Übertragung ihrer Daten D1, D2 zum gleichen Zeitpunkt $t_0$. Selbstverständlich können die Zeitintervalle Z1, Z2 auch zu verschiedenen Zeitpunkten beginnen, wobei jedoch die zweite sendende Station MS2 die Lage des Zeitintervalls Z2 so legt, dass ein möglichst großer Überlapp der Zeitintervalle Z1, Z2 entsteht.

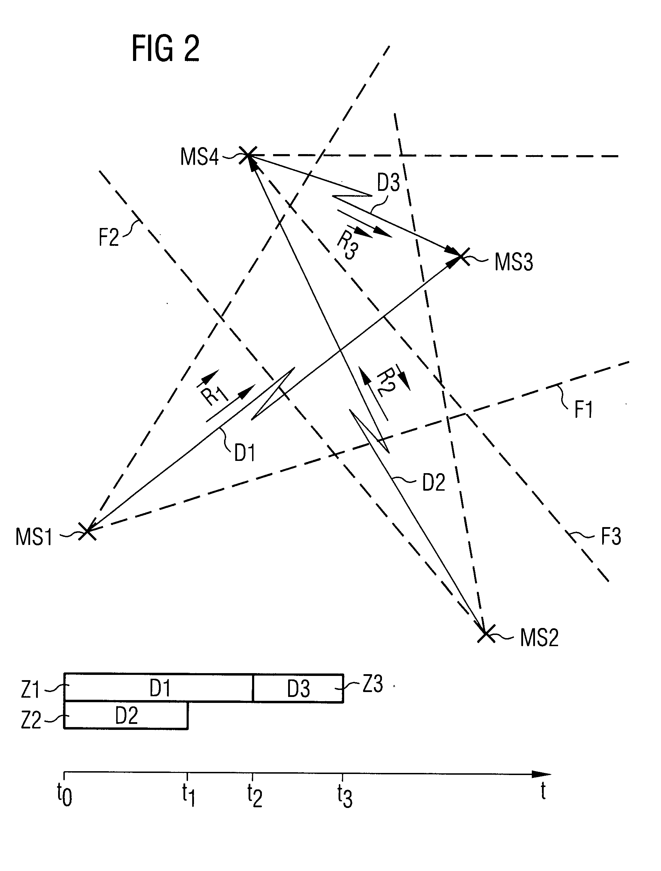

Bevor die erste und die zweite sendende Station MS1, MS2 ihre Daten D1, D2 übertragen, sendet auch die zweite sendende Station eine Richtungsinformation RI, der entnehmbar ist, in welche Raumrichtung $\vec{R}_2$ sie die Übertragung ihrer Daten D2 vorsieht. Die Richtungsinformation RI enthält wiederum eine Antenneninformation AI über die Eigenschaften der Richtantenne RA sowie eine Information ZI über das Zeitintervall Z2, das zur Übertragung der Daten D2 vorgesehen ist. Die Rundsendungen der ersten und zweiten sendenden Station MS1, MS2 werden dann von weiteren Stationen empfangen und von diesen für eine Belegung ihrer Übertragungsressourcen verwendet. Dies ist exemplarisch anhand einer dritten sendenden Station MS4 in Figur 2, die später beschrieben wird, schematisch dargestellt.

Der rundgesendeten Richtungsinformation RI der ersten sendenden Station MS1 ist entnehmbar, in welche Raumrichtung $\vec{R}_1$ sie ihre Daten D1 übertragen möchte. Dazu enthält die Richtungsinformation RI ihre geografische Position $(x_1, y_1)$ und die geografische Position $(x_3, y_3)$ der ersten empfangenden Station MS3. Daraus kann die zweite sendende Station MS2 die Raumrichtung $\vec{R}_1$ berechnen, in die die erste sendende Station MS1 ihre Daten D1 übertragen möchte. Enthält die Richtungsinformation RI nur die geografische Position $(x_3, y_3)$ der ersten empfangenden Station MS3, so kann die zweite sendende Station MS2 die geografische Position $(x_1, y_1)$ der ersten sendenden Station MS1 der rundgesendeten Positionsinformation GI entnehmen. Selbstverständlich kann die Richtungsinformation RI auch nur die erste sendende MS1 und die erste empfangende Station MS3 bezeichnen. Die Raumrichtung $\vec{R}_1$ kann die zweite sendende Station MS2 dann aufgrund der zuvor ohnehin von allen Stationen MS1, MS2, MS3, MS4 des Funksystems rundgesendeten Positionsinformation GI bestimmen. Weiterhin kann die Richtungsinformation RI natürlich auch die geografische Position $(x_1, y_1)$ der ersten sendenden Station und die Raumrichtung $\vec{R}_1$, d.h. den Richtungsvektor $\vec{R}_1$, direkt angeben.

Bezüglich der Antenneninformation AI ist anzumerken, dass diese ohne die Ausführbarkeit der Erfindung zu beeinträchtigen auch separat von der Richtungsinformation RI übertragen werden kann.

Für die Richtungsinformation RI der zweiten sendenden Station MS2 sowie weiterer sendender Stationen gelten selbstverständlich die gleichen Ausführungen wie oben.

In der schematischen Darstellung in Figur 2 (Kreuze bezeichnen hier die sendenden und empfangenden Stationen MS1, MS2, MS3, MS4.), die einen anderen Betriebszustand des Funksystems aus Figur 1 zeigt, überträgt zusätzlich zu der ersten und zweiten sendenden Station MS1, MS2 auch die zweite empfangende Station MS4 Daten D3 an die erste empfangende Station MS3 in einer Raumrichtung $\vec{R}_3$ und in einem dritten räumlichen Funkbereich F3. Wie zuvor für die Datenübertragung der ersten und zweiten sendenden Station MS1, MS2 beschrieben, empfängt die zweite empfangende Station MS4 vor Beginn der Datenübertragung die Sendewünsche der ersten und zweiten sendenden Station MS1, MS2 und legt das Zeitintervall Z3 ihrer Datenübertragung so fest, dass es keine Interferenzen mit den Daten D1, D2 der ersten und zweiten sendenden Station MS1, MS2 gibt.

Der erste und der dritte räumliche Funkbereich F1, F3 überlappen bei der ersten empfangenden Station MS3, so dass die erste sendende Station und die zweite empfangende Station MS4 nicht zeitgleich Daten D1, D3 übertragen dürfen. Auch die zweite sendende Station MS2 darf nicht zeitgleich mit der zweiten empfangenden Station übertragen, da die zweite empfangende Station MS4 nicht gleichzeitig Daten D2 empfangen und Daten D3 senden kann. Aus den genannten Gründen legt die zweite empfangende Station MS3 ihr Zeitintervall Z3, das vom Zeitpunkt $t_2$ bis zum Zeitpunkt $t_3$ dauert, zeitlich hinter die Zeitintervalle Z1, Z2 der ersten und zweiten sendenden Station MS1, MS2.

Die dargestellten Ausführungsbeispiele lassen sich ohne weiteres auf Funksysteme mit beliebiger Anzahl von Stationen übertragen, so dass die Ausführung der Erfindung selbstverständlich nicht auf ein Funksystem mit vier Stationen beschränkt ist.

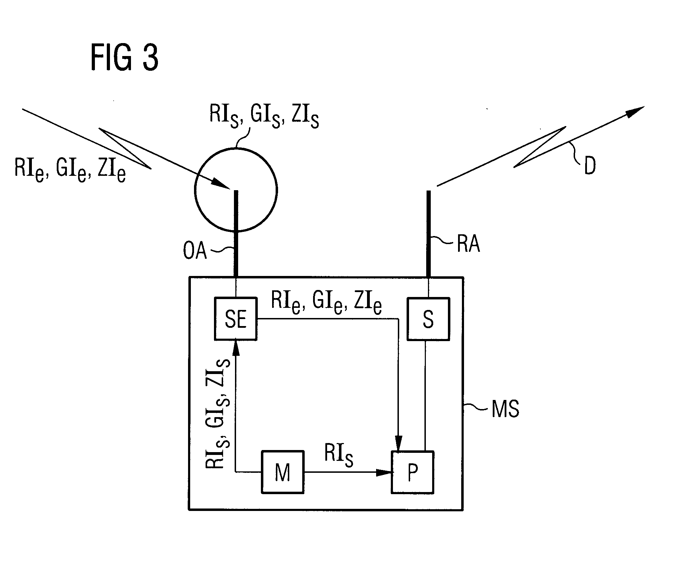

In Figur 3 ist schematisch eine erfindungsgemäße sendende Station MS dargestellt, die gleichzeitig auch alle Einrichtungen einer empfangenden Station aufweist, so dass jede sendende Station eines erfindungsgemäßen Funksystems auch als empfangende Station verwendet werden kann und umgekehrt.

Die sendende Station MS besitzt eine omnidirektionale Antenne OA zum senden und empfangen von Funksignalen, insbesondere für die Aussendung der erfindungsgemäßen Rundsendungen. Weiterhin weist die sendende Station MS eine Richtantenne RA auf, mit der sie Daten D an eine empfangende Station gerichtet senden kann. Die durch die omnidirektionale Antenne OA und eine Sende- und Empfangseinheit SE empfangenen Informationen $ZI_e$ über Zeitintervalle, Richtungsinformationen $RI_e$ und Positionsinformationen $GI_e$ anderer Stationen des Funksystems, werden von einer Einheit P zusammen mit der eigenen Richtungsinformation $RI_s$ der sendenden Station MS ausgewertet, d.h. es wird überprüft, ob der Funkbereich der sendenden Station MS mit Funkbereichen anderer Stationen überlappt. Die Datenübertragung der sendenden Station wird entsprechend dem Ergebnis dieser Überprüfung festgelegt und die Einheit P teilt dann einer Sendeeinheit S mit, wann und in welche Richtung die Daten D an eine empfangende Station übertragen werden sollen.

Ferner hat die sendende Station MS eine Einheit M, mit der sie die eigene Richtungsinformation $RI_s$ bestimmt, der entnehmbar ist, in welche Raumrichtung die sendende Station MS eine Übertragung der Daten D vorsieht. Weitere, nicht dargestellte Einheiten, die jedoch auch - wie in diesem Ausführungsbeispiel - in die Einheit M integriert sein können, bestimmen eine Positionsinformation $GI_s$ und eine Antenneninformation der sendenden Station MS sowie eine Information $ZI_s$ über das Zeitintervall, in dem die Daten D übertragen werden sollen. Alle Informationen $RI_s$, $GI_s$, $ZI_s$ werden an die Sendeund Empfangseinheit SE übermittelt, die diese dann rundsendet.

**Patentansprüche**

1. Verfahren zum Betrieb eines Funksystems mit Stationen (MS1, MS2, MS3, MS4), bei dem

   - eine erste sendende Station (MS1) mit einer Richtantenne (RA) ausgestattet ist,
   - die erste sendende Station (MS1) eine Übertragung von Daten (D1 an eine erste empfangende Station (MS3) mittels der Richtantenne (RA) in einem ersten räumlichen Funkbereich (F1) vorsieht
   - und die erste sendende Station (MS1) eine Richtungsinformation (RI) rundsendet, der entnehmbar ist, in welche Raumrichtung ($\vec{R}_1$) sie die Übertragung der Daten (D1 vorsieht.

2. Verfahren nach Anspruch 1, bei dem

   - eine zweite sendende Station (MS2) die Richtungsinformation (RI) empfängt,
   - und die Richtungsinformation (RI) für ihre Belegung von Übertragungsressourcen berücksichtigt wird.

3. Verfahren nach Anspruch 2, bei dem

   - die zweite sendende Station (MS2) mit einer Richtantenne (RA) ausgestattet ist,
   - die zweite sendende Station (MS2) eine Übertragung von Daten (D2) an eine zweite empfangende Station (MS4) mittels ihrer Richtantenne (RA) in einem zweiten räumlichen Funkbereich (F2) vorsieht,
   - die zweite sendende Station (MS2) anhand der Richtungsinformation (RI) der ersten sendenden Station überprüft, ob der erste und der zweite räumliche Funkbereich (F1, F2) bei einer der empfangenden Stationen (MS3, MS4) überlappen

- und die erste und zweite sendende Station (MS1, MS2) ihre Daten (D1, D2) übertragen, wobei die Übertragung nur dann wenigstens teilweise zeitgleich erfolgt, falls der erste und der zweite räumliche Funkbereich (F1, F2) bei keiner der empfangenden Stationen (MS3, MS4) überlappen.

4. Verfahren nach Anspruch 3, bei dem die zweite sendende Station (MS2) eine Richtungsinformation (RI) rundsendet, der entnehmbar ist, in welche Raumrichtung ($\vec{R}_2$) sie die Übertragung ihrer Daten (D2) vorsieht.

5. Verfahren nach einem der vorstehenden Ansprüche, bei dem die Stationen (MS1, MS2, MS3, MS4) des Funksystems eine Positionsinformation (GI) über ihre geografische Position (($x_1$, $y_1$), ($x_2$, $y_2$), ($x_3$, $y_3$), ($x_4$, $y_4$)) rundsenden.

6. Verfahren nach einem der vorstehenden Ansprüche, bei dem die erste sendende Station (MS1) eine Information über ein zur Übertragung ihrer Daten (D1 an die erste empfangende Station (MS3) vorgesehenes Zeitintervall (Z1) rundsendet.

7. Verfahren nach einem der Ansprüche 3 bis 6, bei dem die zweite sendende Station (MS2) nach Überprüfung der Überlappung des ersten und zweiten räumlichen Funkbereichs (F1, F2) eine Information (ZI) über ein zur Übertragung ihrer Daten (D2) an die zweite empfangende Station (MS4) vorgesehenes Zeitintervall (Z2) rundsendet.

8. Verfahren nach einem der vorstehenden Ansprüche, bei dem die Richtungsinformationen (RI) die geografische Position (($x_1$,$y_1$), ($x_2$,$y_2$)) der jeweiligen sendenden Station (MS1, MS2) und die jeweilige Raumrichtung ($\vec{R}_1$, $\vec{R}_2$), in die abgestrahlt wird, angeben.

9. Verfahren nach einem der vorstehenden Ansprüche, bei dem die Richtungsinformationen (RI) die geografische Position (GP) der jeweiligen empfangenden Station (MS3, MS4) angeben.

10. Verfahren nach einem der vorstehenden Ansprüche, bei dem die Richtungsinformationen (RI) eine Antenneninformation (AI) über die Eigenschaften der verwendeten Richtantenne enthalten.

11. Verfahren nach einem der vorstehenden Ansprüche, bei dem das Funkssystem ein zellulares Funksystem oder ein drahtloses lokales Netz ist.

12. Verfahren nach einem der vorstehenden Ansprüche, bei dem mindestens eine der sendenden Stationen (MS1, MS2) und/oder mindestens eine der empfangenden Stationen (MS3, MS4) eine mobile Station ist.

13. Sendende Station (MS; MS1, MS2) für ein Funksystem,

- mit mindestens einer Richtantenne (RA) zur Übertragung von Daten (D; D1, D2),
- mit mindestens einer omnidirektionalen Antenne (OA) für Rundsendungen
- mit Mitteln (M) zur Bestimmung einer Richtungsinformation ($RI_s$; RI), der entnehmbar ist, in welche Raumrichtung ($\vec{R}_1$, $\vec{R}_2$) die sendende Station (MS; MS1, MS2) die Übertragung der Daten (D; D1, D2) vorsieht,
- und mit Mitteln (SE) zum Rundsenden der Richtungsinformation ($RI_s$; RI) .

14. Funksystem mit einer sendenden Station (MS; MS1, MS2)

- die mindestens eine Richtantenne (RA) zur Übertragung von Daten (D; D1, D2) aufweist,
- die mindestens eine omnidirektionalen Antenne (OA) für Rundsendungen aufweist,
- die Mittel (M) aufweist, mit denen eine Richtungsinformation ($RI_s$; RI) bestimmt wird, der entnehmbar ist, in welche Raumrichtung ($\vec{R}_1$, $\vec{R}_2$) sie die Übertragung der Daten (D; D1, D2) vorsieht,
- und die Mittel (SE) zum Rundsenden der Richtungsinformation ($RI_s$; RI) aufweist.

## FIG 1

# FIG 2

## FIG 3

RI$_S$, GI$_S$, ZI$_S$

RI$_e$, GI$_e$, ZI$_e$

OA

RI$_e$, GI$_e$, ZI$_e$

SE

S

RA

RI$_S$, GI$_S$, ZI$_S$

MS

M   RI$_S$   P

D

| | Europäisches Patentamt | **EUROPÄISCHER RECHERCHENBERICHT** | Nummer der Anmeldung EP 02 01 8095 |
|---|---|---|---|

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| D,A | KO Y-B ET AL: "MEDIUM ACCESS CONTROL PROTOCOLS USING DIRECTIONAL ANTENNAS IN AD HOC NETWORKS" PROCEEDINGS IEEE INFOCOM 2000. THE CONFERENCE ON COMPUTER COMMUNICATIONS. 19TH. ANNUAL JOINT CONFERENCE OF THE IEEE COMPUTER ANDCOMMUNICATIONS SOCIETIES. TEL AVIV, ISRAEL, MARCH, 26-30, 2000, PROCEEDINGS IEEE INFOCOM. THE CONFERENCE ON COMPUTER COMMU, Bd. 3 OF 3. CONF. 19, 26. März 2000 (2000-03-26), Seiten 13-21, XP001004229 ISBN: 0-7803-5881-3 * Absatz [00IV] * ----- | 1-14 | H04Q7/36 H04L12/56 |
| | | | **RECHERCHIERTE SACHGEBIETE (Int.Cl.7)** H04Q H04L |

Der vorliegende Recherchenbericht wurde für alle Patentansprüche erstellt

| Recherchenort | Abschlußdatum der Recherche | Prüfer |
|---|---|---|
| DEN HAAG | 10. Januar 2003 | Weinmiller, J |

EPO FORM 1503 03.82 (P04C03)